# EUROPÄISCHE PATENTSCHRIFT

(11) **EP 3 974 150 B1**
(45) Veröffentlichungstag und Bekanntmachung des Hinweises auf die Patenterteilung: **02.08.2023**
(21) Anmeldenummer: 21197458.9
(22) Anmeldetag: 17.09.2021
(51) Int. Cl.: B29C 48/325, B29C 48/10, B29C 48/25, B29C 48/09, B29C 48/92

(54) **EXTRUSIONSKOPF UND VERFAHREN ZUR HERSTELLUNG EINES LÄNGLICHEN HOHLKÖRPERS MITTELS DIESES EXTRUSIONSKOPFS**
EXTRUSION HEAD AND METHOD OF MANUFACTURING AN ELONGATED HOLLOW BODY USING SAID EXTRUSION HEAD
TÈTE D'EXTRUSION ET PROCÉDÉ DE FABRICATION D'UN CORPS CREUX OBLONG AU MOYEN DE LADITE TÈTE D'EXTRUSION

(30) Priorität: 28.09.2020 DE 102020125261
(43) Veröffentlichungstag der Anmeldung: 30.03.2022
(73) Patentinhaber: TROESTER GmbH & Co. KG, 30519 Hannover (DE)
(72) Erfinder: Hoffmann, Wieland, 30539 Hannover (DE); Andreas, Grothe, 29303 Bergen (DE)
(74) Vertreter: Scheffler, Jörg

(56) Entgegenhaltungen:
- EP-A1- 3 552 799
- CN-A- 110 328 824
- DE-A1-102008 061 286
- DE-U- 6 907 010
- US-A- 2 349 178

## Beschreibung

Die Erfindung betrifft einen Extrusionskopf aufweisend einen Dorn, welcher in einem Gehäuse in eine Extrusionsrichtung von einem Extrusionsmaterial umströmbar gelagert ist und hierbei ein endseitiger Mundstückabschnitt des Dorns in einer Öffnung eines in Extrusionsrichtung stromab des Dorns angeordneten Mundstücks des Extrusionskopfs einen umlaufenden und in seiner Geometrie veränderlichen Spalt zwischen Mundstückabschnitt und Mundstück bildend angeordnet ist. Ferner betrifft die Erfindung ein Verfahren zur Herstellung eines länglichen Hohlkörpers als Extrudat einer Extrusion des Extrusionsmaterials mittels dieses Extrusionskopfs.

Die Herstellung von länglichen Hohlkörpern wie z. B. Rohren oder Schläuchen aus einem Extrusionsmaterial wie Kunststoff erfolgt regelmäßig durch eine Extrusion unter Verwendung eines Extruders, dessen Extrusions- oder auch Spritzkopf einen Ringspalt aufweist, wie in EP 3 552 799 A1, DE 69 07 010 U, US 2 349 178 A und CN 110 328 824 A beschrieben ist.

Dabei definiert die Geometrie des Ringspalts naturgemäß die geometrische Ausgestaltung des Hohlkörpers, hierbei insbesondere dessen grundlegende Querschnittsform sowie dessen Wanddicke.

Die Ausbildung des Ringspaltes ist dabei meist über einen innerhalb des Extrusionskopfs vom Extrusionsmaterial umströmbar gelagerten Dorn verwirklicht, wobei ein freies Ende des Dorns in eine Öffnung eines Mundstücks eingreift. Sind hierbei Dorn und Mundstück beispielsweise gestellfest und somit gegenüber einander positionsunveränderlich festgelegt besteht demzufolge auch lediglich eine durch die Ausformung des Dorns und der Öffnung des Mundstücks bestimmte, invariable Geometrie des Ringspalts.

Ein solch invariabler Ringspalt ist jedoch aus verschiedenen Gründen als nachteilig zu betrachten, sodass es vielfach erstrebenswert ist, den Ringspalt derart auszubilden, dass die Geometrie des Ringspalts aktiv beeinflussbar ist. Im Wesentlichen können hierbei zwei grundlegende Zielstellungen als Gründe angeführt werden, die Geometrie des Ringspalts beeinflussbar auszugestalten.

Eine erste Zielstellung die Geometrie des Ringspalts zu beeinflussen kann dabei darin bestehen, die geometrische Ausgestaltung des Hohlkörpers selbst über dessen Länge, insbesondere in seiner Querschnittsform und/oder seiner Wanddicke in Abhängigkeit der an den Hohlkörper gestellten Anforderungen aktiv zu verändern. Somit demnach während des Extrusionsprozesses eine Soll-Änderung der geometrischen Ausgestaltung des Hohlkörpers als Fertigungsschritt neben der Extrusion hervorzurufen.

Hinsichtlich der vorgenannten Zielstellung beschreibt die DE 2 139 108 A beispielsweise einen Extrusionskopf zur Herstellung von rohrförmigen Halbfabrikaten aus einem thermoplastischen Kunststoff. Im Extrusionskopf ist ein Einsatz angeordnet, welcher seinerseits einen Dorn aufweist. Der Dorn ist entlang der Extrusionsrichtung axialverschieblich angeordnet und wirkt bei der Axialverschiebung unter Bildung einer Ringspaltdüse derart mit einer abgestuft konisch ausgeformten Innenfläche eines Mundstücks zusammen, dass die Wanddicke des Halbfabrikats in dessen axiale Richtung veränderbar ist. Dies bildet bei der Weiterverarbeitung der axial unterschiedliche Wanddicken aufweisenden Halbfabrikate zu beispielsweise Kunststoffflaschen den Vorteil, dass aufgrund der Formung in einem Blasprozess insbesondere der Flaschenhals der Kunststoffflasche zumindest annähernd die gleiche Wandstärke aufweist, wie der Flaschenkörper.

Auch die Herstellung von Hohlkörpern mit jeweils unterschiedlicher, jedoch über die Länge des Hohlkörpers gleicher Wanddicke unter Verwendung des gleichen Extrusionskopfes kann mit einer solchen axialen Wanddickensteuerung realisiert werden.

In vergleichbarem Zusammenhang ist der DE 102 37 051 A1 ein Extrusionskopf zur Herstellung insbesondere dünnwandiger, mehrfach gekrümmter Rohre zu entnehmen, welcher ebenfalls einen entlang der Extrusionsrichtung axialverschieblichen Dorn aufweist. Über die Ausbildung eines Ringspalts zwischen dem Dorn und einem mit dem Dorn zusammenwirkenden Düsenkörper sowie der axialen Verschiebung des Dorns ist eine axiale Wanddickensteuerung realisiert. Überdies ist der Düsenkörper über zwei durch Stelleinrichtungen bewegliche Stellrahmen in einer Ebene normal zur Extrusionsrichtung verschiebbar ausgeführt, sodass der Dorn im Ringspalt exzentrisch positioniert werden kann und entsprechend neben der axialen auch eine radiale Wanddickensteuerung verwirklicht ist. Hierdurch lässt sich die Wanddicke in den Krümmungsbereichen axial sowie radial quasi optimal der vorgebenen Krümmung anpassen.

Andererseits kann eine zweite Zielstellung die Geometrie des Ringspalts zu beeinflussen, gegensätzlich zur ersten Zielstellung darin bestehen, eine Ist-Änderung der geometrischen Ausgestaltung des Hohlkörpers während des Extrusionsprozesses zu vermeiden und dadurch eine möglichst gleichmäßige Ausgestaltung des Hohlkörpers über dessen Länge, hierbei insbesondere in seiner Querschnittsform und/oder seiner Wanddicke zu erreichen. Solche unerwünschten Ist-Änderungen können bei einer invariablen Geometrie des Ringspalts beispielsweise durch Justageungenauigkeiten des Dorns gegenüber der Öffnung des Mundstückes, deren Positionsverschiebung gegenüber einander aufgrund während des Extrusionsprozesses auf Dorn und/oder Mundstück wirkender Kräfte sowie auch durch temporär und/oder lokal unterschiedliche Eigenschaften des Extrusionsmaterials hervorgerufen werden.

Im Zusammenhang mit der zweiten Zielstellung ist aus der DE 2 023 008 A zudem ein Extrusionskopf bekannt, bei welchem in einer ersten Ausführungsform ein mit einem Dorn einen Ringspalt bildender Düsenmantel zwei über eine Einschnürung voneinander getrennte Abschnitte aufweist. Der obere Abschnitt ist hierbei fest eingespannt und die Einschnürung bildet im Wesentlichen ein Festkörpergelenk, um welches der untere Abschnitt über Verstellorgane in einer Ebene normal zur Extrusionsrichtung quasi verschwenkbar ausgeführt ist, sodass der Ringspalt im Bereich der Düsenöffnung radial verstellbar ist. Die Verstellung dient dabei dem Nachstellen der Geometrie des Ringspaltes bei auftretenden Abweichungen von der gewünschten geometrischen Gestalt des Ringspalts.

Die DE 10 2008 061 286 A1 zeigt zudem einen Extruder mit einem Querspritzkopf sowie ein Verfahren zur Herstellung von schlauchförmigen Hohlkörpern. Hierbei bildet eine an einer schwenkbaren Pinole ausgeführte Extruderdüse mit einem am Gehäuse des Extruders angeordneten Mundstück einen einstellbaren Ringspalt aus. Die Pinole ist zur Einstellung des Ringspalts über zwei Hydraulikzylinder um zwei Schwenkachsen schwenkbeweglich ausgeführt.

Aus der DE 10 2018 204 729 A1 ist weiterhin ein Werkzeugkopf eines Hohlprofil-Extruders bekannt, welcher einen Werkzeugdorn aufweist, der mit einem Werkzeugring einen Ringkanal ausbildet. Der Werkzeugdorn wird dabei von einem Dornträger getragen, welcher über ein Kippgelenk um zwei Freiheitsgrade kippbar gelagert ist. So ist eine Homogenisierung einer Wanddicke eines extrudierten Schlauchs in Umfangsrichtung möglich. Über eine vorgebbare Axialposition des Werkzeugrings relativ zum Werkzeugdorn lässt sich zudem die Wandstärke des zu extrudierenden Schlauchs vorgeben.

Die EP 0 250 828 A2 beschreibt überdies einen Extruder mit einem Spritzkopf zum Ummanteln eines Kabels. Hierbei ist ein mittlerer Dorn des Spritzkopfs über ein Kugelkalottenflächen aufweisendes Gelenk verschwenkbar und feststellbar im Spritzkopf gelagert.

Durch die gattungsbildende DE 19 08 933 A wird zudem ein Extruder beschrieben, welcher einen Dorn aufweist, der mit einem Düsenmantel einen Ringspalt ausbildet. Der Dorn ist hierbei über einen Stellhebel und einen kugelförmigen Lagerkopf um die Längsachse des Stellhebels schwenkbar im Düsenmantel gelagert, sodass in die Schwenkrichtung eine Querschnittsveränderung des Ringspalts ermöglicht wird.

Es lässt sich in Bezug auf den Stand der Technik anführen, dass unabhängig der Zielstellung die technischen Lösungen zur Realisierung einer axialen sowie radialen Ringspaltverstellung mit vergleichbaren Mitteln erfolgt. Die Aufgezeigten Lösungen bieten jedoch den Nachteil, dass es sich um individuelle Lösungen handelt, welche sich somit nicht auf bereits vielfach vorhandenen Extrudern nachrüsten lassen. Es ist jedoch oftmals wünschenswert, dass auch bereits existierende Extruder die Möglichkeit einer Ringspaltverstellung und somit einer Wanddickensteuerung aufweisen, um die Maßhaltigkeit der erzeugten Hohlkörper zu erhöhen.

Vor diesem Hintergrund liegt der Erfindung die Aufgabe zugrunde, einen Extrusionskopf bereitzustellen, welcher sich zur Nachrüstung bereits vielfach vorhandener Extruder mit einer Spaltverstellung eignet. Zudem soll ein Verfahren zur Verfügung gestellt werden über welches sich die Maßhaltigkeit Hergestellter Hohlkörper mittels des Extrusionskopfs steigern lässt.

Diese Aufgabe wird erfindungsgemäß mit einem Extrusionskopf gemäß den Merkmalen des Anspruchs 1 sowie einem Verfahren gemäß den Merkmalen des Anspruches 13 gelöst. Die weitere Ausgestaltung der Erfindung ist den Unteransprüchen zu entnehmen.

Erfindungsgemäß ist also ein Extrusionskopf - oder auch Spritzkopf - vorgesehen, wobei der Extrusionskopf einen in einem Gehäuse des Extrusionskopfs angeordneten - insbesondere torpedoförmigen - Dorn aufweist. Der Dorn ist dabei in - wenigstens - eine Extrusionsrichtung des Extrusionskopfs von einem Extrusionsmaterial umströmbar gelagert. Ferner weist der Dorn einen endseitigen Mundstückabschnitt auf, welcher in einer Öffnung eines in Extrusionsrichtung stromab des Dorns angeordneten Mundstücks des Extrusionskopfs frei angeordnet ist. Hierbei bildet der Mundstückabschnitt des Dorns mit dem Mundstück einen in seiner Geometrie veränderlichen oder auch verstellbaren, umlaufenden Spalt. Die Verstellbarkeit des Spalts ergibt sich erfindungsgemäß dadurch, dass der Dorn um zumindest eine Achse - insbesondere senkrecht, normal oder auch - quer zur Extrusionsrichtung schwenkbar im Gehäuse des Extrusionskopfs gelagert ist. Es ist dabei denkbar, dass die Lagerung des Dorns einseitig respektive über eine Stelle des Gehäuses erfolgt. Bevorzug ist der Dorn jedoch zweiseitig, also über zwei Stellen im Gehäuse um die Achse schwenkbar gelagert. Ferner ist anzumerken, dass die Extrusionsrichtung entlang der Längsachse des Extrusionskopfs verläuft, respektive mit der Längsachse zusammenfällt.

Durch die schwenkbare oder auch schwenkbewegliche Lagerung des Dorns um eine Achse quer zur Extrusionsrichtung ist in dem Extrusionskopf eine Spalt- respektive eine Wanddickenverstellung etabliert, welche über einen Freiheitsgrad verfügt. Folgerichtig lässt sich auch die Geometrie des umlaufenden Spalts zwischen Mundstückabschnitt und Öffnung quer zur Extrusionsrichtung verändern. Die so im Extrusionskopf ausgebildete Spalt- bzw. Wanddickenverstellung ermöglicht in unmittelbarem Zusammenhang eine Anpassung der Wanddicke und damit zusammenhängend der grundlegenden Querschnittsform in Querachs-Richtung eines mittels des Extrusionskopfs extrudierten Hohlkörpers. Hierbei insbesondere in Umfangsrichtung des Querschnitts.

Die Anpassung könnte dabei durchaus mit der Zielstellung erfolgen, die geometrische Ausgestaltung des länglichen Hohlkörpers gemäß einer an den Hohlkörper gestellten Anforderung anzupassen. Bevorzugt erfolgt die Anpassung jedoch mit der Zielstellung eine - im Wesentlichen - gleichmäßige Wanddicke und damit verbunden eine gleichmäßigen Querschnittsform über die Länge des extrudierten Hohlköpers zu gewährleisten.

In bevorzugter Ausführung weisen die Öffnung des Mundstücks sowie des in die Öffnung eingreifenden Mundstückabschnitts des Dorns einen kreisförmigen Querschnitt auf. Hierbei ist ein Radius des Mundstückabschnitts stets geringer als ein Radius der Öffnung des Mundstücks, sodass der umlaufende Spalt zwischen Mundstückabschnitt und Öffnung als ein Ringspalt ausgebildet wäre. Denkbar ist in diesem Zusammenhang, dass der Mundstückabschnitt des Dorns über seine Längsausdehnung entlang der Längsachse des Dorns einen konstanten Radius und somit eine zylindrische Form aufweist.

Ausgehend von einem im vorherigen Absatz beschriebenen kreisförmigen Querschnitt von Mundstückabschnitt und Öffnung erfolgt die Veränderung der Geometrie des Ringspaltes in radiale Richtung, womit eine Anpassung der geometrischen Ausgestaltung entlang der der Längsachs-Richtung des länglichen Hohlköpers in dessen Radial-Richtung einhergeht. Dadurch wäre in dem Extrusionskopf in eine Achsrichtung auch eine radiale Ringspalt- sowie radiale Wanddickenverstellung etabliert.

Der längliche Hohlkörper selbst kann hierbei insbesondere als ein Schlauch oder ein Rohr ausgebildet sein. Je nach verwendetem Extrusionsmaterial, insbesondere Kunststoffe, kann dabei eine höhere oder geringere Elastizität vorliegen.

In vorteilhafter Weise eignet sich der erfindungsgemäße Extrusionskopf aufgrund der Konzentration der für eine Verstellung des Spalts notwendigen Komponenten in dem Extrusionskopf selbst gewinnbringend zur Nachrüstung bereits vielfach vorhandener Extruder, was die Nachhaltigkeit dieser über die Maße steigert.

Erfindungsgemäß ist der Dorn zudem in Richtung - oder auch entlang - der Achse und somit quer zur Extrusionsrichtung längsbeweglich gelagert. Hierdurch wird ein weiterer Freiheitsgrad der Bewegung des Dorns senkrecht zu dem Freiheitsgrad, welcher über das Schwenken um dieselbe Achse realisiert ist, zur Verfügung gestellt. Im gleichen Maße wird ein weiterer Freiheitsgrad zur Veränderung der Geometrie des umlaufenden Spalts zur Verfügung gestellt, wobei durch die Überlagerung der Schwenkbewegung um die Achse und der Längsbewegung entlang der Achse eine Veränderung der Geometrie des Spalts bzw. Ringspalts sowie auch der Anpassung der geometrischen Ausgestaltung des extrudierten Hohlkörpers in einer Querebene, bei kreisförmigen Querschnitten von Mundstückabschnitt und Öffnung in einer Radialebene realisierbar ist. Dies bietet eine deutlich gesteigerte Ausgleichsmöglichkeit möglicher, im Extrusionsprozess am Hohlkörper auftretender Abweichungen von einer Soll-Gestalt. Zudem ließe sich die Lagerung des Dorns gewinnbringend über lediglich ein Lagerelement gestalten, über welches zugleich zwei Bewegungs-Freiheitsgrade des Dorns zur Verfügung gestellt werden.

Hierzu fortführend soll in einer gewinnbringenden Ausführungsform der Erfindung vorgesehen sein, dass der Dorn - insbesondere zentrisch im Gehäuse und/oder mit seiner Längsachse in Extrusionsrichtung - an einem die Achse verkörpernden, länglichen Halter angeordnet ist. Im Speziellen sollte der längliche Halter dabei als ein Stegdornhalter ausgeführt sein, bei welchem ein unmittelbar an den Dorn angrenzender Teil des Halters als ein dünnwandiger Steg ausgebildet ist. Dabei ist der Steg derart am Dorn angeordnet, dass die dünnen Seiten des Steges, also die zwei gegenüberliegenden Seiten des Steges mit den geringsten Abmessungen - insbesondere in unverschwenkter Stellung des Dorns - in Extrusionsrichtung ausgerichtet sind, sodass ein Strömungswiderstand des Stegs bei Umströmung des Dorns mit dem Extrusionsmaterial minimal ist. In einer Gestaltungsvariante kann der Halter lediglich einteilig ausgeführt und somit nur einseitig mit dem Dorn verbunden sowie einseitig respektive an einer Stelle des Gehäuses gelagert sein. Dies kann jedoch aufgrund der beim Extrusionsprozess durch das Extrusionsmaterial auf den Dorn wirkenden Kräfte zu einer zu hohen Verschiebung des Dorns und gegebenenfalls einer Kollision des Mundstückabschnitts mit dem Mundstück führen. Um dies zu vermeiden, ist der Halter bevorzugt zweiteilig ausgeführt, wobei dieser entlang der Achse entsprechend zweiseitig des Dorns mit diesem verbunden und folglich auch zweiseitig respektive an zwei Stellen des Gehäuses gelagert ist.

Ferner ist eine Ausgestaltung der Erfindung als erfolgversprechend anzusehen, wenn der Extrusionskopf zumindest ein in einer in dem Gehäuse ausgeformten Lageraufnahme angeordnetes Lagerelement aufweist, wobei der Halter über einen am Halter ausgeformten Lagerabschnitt in dem Lagerelement - drehbeweglich oder dreh- und längsbeweglich - gelagert ist. So können insbesondere die Kräfte, die während eines Extrusionsprozesses über das Extrusionsmaterial auf den Dorn wirken effizienter, insbesondere ohne Kraftspritzen auf das gestellfeste Gehäuse übertragen werden, während die Bewegungen um sowie entlang der Achse vorteilhaft keiner oder lediglich einer geringen Beeinflussung unterliegen. Auch wenn die Möglichkeit besteht, zur Lagerung des Dorns lediglich eine Lageraufnahme, ein Lagerelement sowie ein Lagerabschnitt und somit eine einseitige Lagerung des Dorns vorzusehen, ist es zur optimalen Verteilung der während eines Extrusionspozesses wirkenden Kräfte vorzuziehen, eine zweiseitige Lagerung des Dorns über zwei Lageraufnahmen, zwei Lagerelemente sowie zwei Lagerabschnitte auszugestalten. Vorteilhafterweise wären im Allgemeinen eine Aufnahme im Lagerelement sowie der Lagerabschnitt möglichst zylindrisch ausgeführt. Insbesondere könnte das Lagerelement als ein Gleitlager, beispielsweise als eine Buchse ausgebildet sein. Dabei besteht die Möglichkeit, dass eine solche Buchse mehrteilig und bei mehrteiliger Ausführung bevorzugt zweiteilig ausgebildet ist. Die Buchse bestünde zudem bevorzugt aus einer Bronze, insbesondere aus einer Aluminium-Bronze. Um eine Reaktionsneigung mit dem Extrusionsmaterial zu vermeiden oder zumindest zu minimieren kann angedacht sein, dass die Buchse auf einer innenseitig des Gehäuses befindlichen Oberfläche eine Schutzbeschichtung aufweist. Beispielsweise könnte die Oberfläche hierfür verchromt sein.

In einer praxisgerechten Gestaltung der Erfindung ist überdies vorgesehen, dass zwischen Lagerelement und Lagerabschnitt des Halters eine schleifende Dichtung ausgeführt ist. Die Anordnung einer solchen, insbesondere aus einem Gummi bestehenden, schleifenden Dichtung zwischen dem Lagerabschnitt und dem Lagerelement bietet eine bewährte und kostengünstige Lösung zur Abdichtung des Extrusionskopfs gegenüber einem Austritt von Extrusionsmaterial. Dabei besteht vorteilhaft eine große Auswahl an Standardgeometrien.

Im zuvor beschriebenen Zusammenhang soll zudem weiterbildend angedacht sein, dass das Lagerelement eine Buchse ist und - insbesondere einem Buchsenflansch und/oder in Einbaulage der Buchse der Lageraufnahme abgewandt - an der Buchse endseitig eine Dichtlippe ausgeformt ist. Die Dichtlippe sollte einteilig mit der Buchse ausgebildet und somit aus dieser ausgeformt sein, wobei sich die Dichtlippe bevorzugt in Richtung des Dorns, beispielsweise konisch, verjüngt. Durch den während eines Extrusionsproszesses über das Extrusionsmaterial auf die Buchse wirkenden Druck und die somit in Richtung des Halters auf die Dichtlippe wirkenden Kräfte, wird eine Dichtwirkung zwischen Buchse und Halter, hierbei insbesondere dem Lagerabschnitt erhöht, wodurch sich ein Austreten von Extrusionsmaterial aus dem Gehäuse des Extrusionskopfs minimieren oder gar verhindern lässt.

Ein zur Verhinderung des Austretens von Extrusionsmaterial konträrer Ansatz, kann in einer Weiterführung der bereits genannten Ausführungsvarianten der Erfindung dadurch verfolgt werden, dass eine zwischen dem Lagerelement und dem Lagerabschnitt des Halters etablierte Passung eine Spaltbreite aufweist, welche eine definierte Leckage des Extrusionsmaterials ermöglicht. Ferner kann in Hinblick auf die Passung vorgesehen sein, dass diese eine auf die definierte Leckage abgestimmte, definierte Spaltbreite aufweist. Einerseits kann dadurch ein stetiger Austritt von Extrusionsmaterial aus dem Gehäuse des Extrusionskopfs und sich eine dadurch einstellende Schmierung des Lagerelements, insbesondere einer Buchse bewirkt werden. Andererseits ist es möglich, dass das Extrusionsmaterial in einen Spalt zwischen Lagerelement und Halter, insbesondere dem Lagerabschnitt des Halters eindringt, sich verfestigt und dadurch eine Abdichtung des Extrusionskopf gegenüber einem weiteten Austritt von Extrusionsmaterial durch das verfestigte Extrusionsmaterial eintritt. Die Leckage sollte hierbei im Allgemeinen weniger als 0,1 Prozent des Durchflusses an Extrusionsmaterial durch den Extrusionskopf betragen.

In unkonventioneller Weise besteht eine Ausbildung des erfindungsgemäßen Extrusionskopfs darin, dass das Lagerelement eine Buchse ist, wobei wenigstens ein Teil der Buchse aus einem Elastomer besteht. Die Buchse kann demnach einteilig und somit vollständig aus einem Elastomer ausgebildet sein. Es besteht darüber hinaus zudem die Möglichkeit, dass die Buchse, wie zuvor ebenfalls dargelegt, mehrteilig und dabei bevorzugt zweiteilig ausgebildet ist, wobei in konstruktiv sinnvoller Weise der radial innenliegende Teil der Buchse aus dem Elastomer besteht. Dies ist notwendig, um ein Abdichten gewährleisten zu können. Das für die Buchse oder den Teil der Buchse gewählte Elastomer würde in einer gestalterisch interessanten Ausführung derart gewählt, dass ein Abdichten gegenüber einem Austritt des Extrusionsmaterials aus dem Gehäuse des Extrusionskopfs ermöglicht und zugleich die Funktion als Lagerelement, hierbei insbesondere als Gleitlager, nicht eingeschränkt ist.

In einer insbesondere zum Vorstehenden gestalterisch gegensätzlichen Ausbildung der Erfindung ist der - ausschließlich - eine aus einem Elastomer bestehende Teil der Buchse mit dem Lagerabschnitt - und dem nicht aus einem Elastomer bestehenden weiteren Teil der Buchse - fest verbunden, wobei der aus dem Elastomer bestehende Teil der Buchse sich verformend eine gleitende Dreh- und/oder Längsbewegung des Halters gegenüber dem aus dem Elastomer bestehenden Teil der Buchse unterbindet. Die dabei vorliegende feste Verbindung zwischen dem Lagerabschnitt und dem aus dem Elastomer bestehenden Teil der Buchse, beispielsweise einem Elastomerring, sollte bevorzugt eine stoffschlüssige Verbindung sein. Eine kraft- und/oder formschlüssige Verbindung kann jedoch ebenfalls vorliegen. Der Halter, hierbei das Lagerelement des Halters, ist demnach gegenüber dem aus dem Elastomer bestehenden Teil der Buchse nicht frei gleitend dreh- und/oder längsbeweglich. Hingegen stellt sich bei einer Dreh- und/oder Längsbewegung des Halters und damit einer Schwenk- und/oder Längsbewegung des Dorns um die Achse quer zur Extrusionsrichtung eine bevorzugt elastische Verformung des aus dem Elastomer bestehenden Teils der Buchse ein. So lassen sich vorliegend zu erwartende Hübe bereitstellen und zugleich eine quasi optimale Abdichtung des Extrusionskopfs gegenüber einem Austritt von Extrusionsmaterial gewährleisten.

In einer Ausführungsform der Erfindung soll in vergleichbarerer Weise zudem vorgesehen sein, dass zwischen Lagerelement und Lagerabschnitt des Halters eine mit dem Lagerelement und dem Lagerabschnitt - stoffschlüssig oder kraft- und/oder formschlüssig und somit - fest verbundene Dichtung ausgeführt ist, welche sich verformend eine gleitende Dreh- und/oder Längsbewegung des Halters gegenüber der Dichtung unterbindet. Somit würde entsprechend auch in dieser Ausführungsform keine frei gleitende Dreh- und/oder Längsbewegung zwischen dem Halter, hierbei dem Lagerabschnitt des Halters, und der Dichtung ermöglicht. Eine Dreh- und oder Längsbewegung des Halters und somit eine Schwenk- und/oder Längsbewegung des Dorns wären nur aufgrund einer elastischen oder auch einer reversibel plastischen Verformung der Dichtung durchführbar. Auch in diesem Fall ließen sich die zu erwartenden Hübe vorteilhaft bereitstellen und zugleich eine quasi optimale Abdichtung des Extrusionskopfs gegenüber einem Austritt von Extrusionsmaterial gewährleisten.

Insbesondere in Kombination mit der zuvor dargestellten Verstellung des umlaufenden Spalts stellt sich eine Weiterbildung der Erfindung als vielversprechend dar, wenn überdies das Mundstück in Extrusionsrichtung axialbeweglich in dem Gehäuse angeordnet ist. Hierzu lässt sich zunächst darlegen, dass im Allgemeinen, jedoch insbesondere in Hinblick auf erläuterte axialbewegliche Anordnung des Mundstücks im Gehäuse des Extrusionskopfs gewinnbringend die Möglichkeit bestünde, dass der Mundstückabschnitt im Gegensatz zu der zuvor beschriebenen zylindrischen Ausgestaltung und somit einem konstanten Radius des Mundstückabschnitts zumindest über einen Teil seiner Längenausdehnung einen variablen Radius aufweist. Im Gegenzug könnte auch die Öffnung zumindest über einen Teil der Ausdehnung des Mundstücks in Extrusionsrichtung einen variablen Radius aufweisen. Als Beispiel ließe sich hierfür annehmen, dass der Mundstückabschnitt und/oder die Öffnung in einer solche Ausgestaltung in Extrusionsrichtung konisch ausgeformt sind. Bei Ausgestaltung wenigstens einer der zusammenwirkenden Komponenten Mundstückabschnitt und Öffnung mit einem variablen Radius würde es entsprechend ermöglicht, dass eine axiale Bewegung des Mundstückes entlang der Längsachse des Extrusionskopfs und somit in oder entgegen der Extrusionsrichtung eine Veränderung der Geometrie des Ringspalts bewirkt, die in einer Anpassung der Wanddicke des extrudierten Hohlkörpers in dessen Längsachs-Richtung, ohne Änderung der grundlegenden Querschnittsform resultiert. Die Wanddicke würde demnach über den gesamten Querschnitt des Hohlköpers zu oder abnehmen. Dies entspricht einer axialen Spalt- respektive Ringspalt- sowie Wanddickenverstellung.

Weiterhin ist eine Gestaltungsform der Erfindung dadurch bestimmt, dass sich der Halter wenigstens einseitig durch das Gehäuse bis auf eine Außenseite des Gehäuses erstreckt, wobei - je - endseitig des Halters - je - ein Arm mit dem Halter verbunden ist. Der Arm oder die Arme stellen hierbei ein Mittel dar, eine an einem dem Halter abgewandten Ende des Arms angreifenden Bewegung zu übersetzen. Insbesondere könnte dabei ein Stellweg untersetzt werden, wodurch eine höhere Auflösung der Schwenkbewegung des Dorns und somit der Spaltverstellung realisiert würde. Dies ist zudem mit der Möglichkeit eines feineren Ausgleichs auftretender Abweichungen des Hohlkörpers von einer Soll-Gestalt verbunden. Zudem könnte ein eine solche Stellbewegung initiierendes Mittel, wie z. B. ein Stellantrieb an einer bauraumgünstigen Position angeordnet werden. Bei Ausführung eines Arms je Ende des Halters besteht zudem die Möglichkeit, die vom Halter abgewandten Enden der Arme untereinander selbst, z. B. mittels eines Gestänges zu verbinden. Dadurch würde vorteilhaft ein Weg eröffnet beide Arme über lediglich ein Mittel mit einer Stellbewegung zu beaufschlagen.

Soll insbesondere eine Regelung der Geometrie des veränderlichen, umlaufenden Spalts vorgesehen werden, stellt es sich vorteilhaft dar, wenn der Dorn in einer Ausführungsform der Erfindung - insbesondere über den Halter - mit zumindest einem Stellantrieb verbunden und somit über den Stellantrieb eine Schwenk- und/oder Längsbewegung des Dorns bewirkbar ist. Bevorzugt ist für die Schwenkbewegung als auch für die Längsbewegung je zumindest ein Stellantrieb vorgesehen. Durch die Verwendung von motorischen Stellantrieben ist es überaus vorteilhaft möglich einen Ausgleich einer Abweichung des extrudierten Hohlkörpers von seiner Soll-Gestalt insbesondere in Echtzeit über eine Regelschleife durch die Initiierung der Schwenkbewegung und/oder der Längsbewegung des Dorns zu verwirklichen.

Vor diesem Hintergrund ist erfindungsgemäß weiterhin auch ein Verfahren zur Herstellung eines länglichen Hohlkörpers als Extrudat einer Extrusion des Extrusionsmaterials mittels des vorgenannten Extrusionskopfes vorgesehen. Im Rahmen des erfindungsgemäßen Verfahrens wird dabei - insbesondere dauerhaft während der Extrusion - eine Abweichung einer Ist-Gestalt, hierbei insbesondere einer Querschnittsform und/oder einer Wanddicke, des Extrudats von einer Soll-Gestalt des Extrudats bestimmt. Ferner wird der umlaufende Spalt des Extrusionskopfes - hierbei insbesondere in Echtzeit über den zumindest einen Stellantrieb - durch eine Schwenk- und/oder Längsbewegung des Dorns die Abweichung ausgleichend nachgeregelt. Dadurch lassen sich extrudierte Hohlkörper mit einer hohen Maßhaltigkeit herstellen, welche entsprechend keine oder nur eine geringe Abweichung von ihrer Soll-Gestalt aufweisen. Zur Durchführung des Verfahrens kann es als vorteilhaft angesehen werden, wenn z. B. der Extrusionskopf zumindest einen Messaufnehmer aufweist, mittels welchem die Ist-Gestalt des Extrudats und/oder des extrudierten Hohlkörpers bestimmbar ist. Ein solcher Messaufnehmer könnte beispielsweise auf einem optischen Messverfahren und/oder einer Bildverarbeitung basieren. Auch ein Messprinzip auf einer Röntgenbasis ist denkbar. Darüber hinaus könnten zudem weitere Messaufnehmer zur Bestimmung einer vorliegenden Schwenkbewegung und/oder Längsbewegung um oder entlang der Achse quer zur Extrusionsrichtung angeordnet werden. Weiterhin kann auch die Bestimmung der Viskosität des Extrusionsmaterials in die Regelung einfließen.

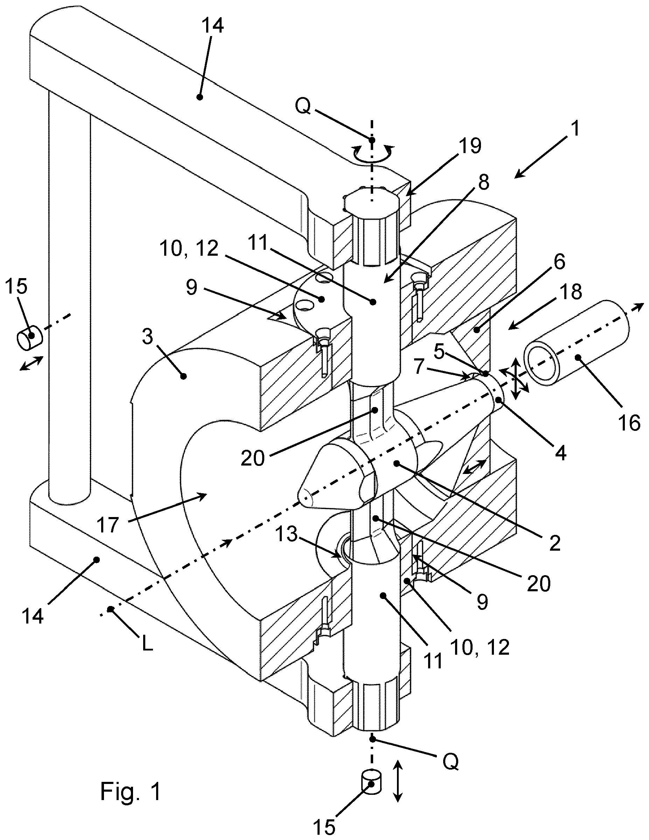

Die Erfindung lässt verschiedene Ausführungsformen zu. Zur weiteren Verdeutlichung ihres Grundprinzips ist eine davon in der Zeichnung dargestellt und wird nachfolgend beschrieben. Diese zeigt in
Fig. 1 eine Schnittdarstellung eines Extrusionskopfs.

Der in Figur 1 dargestellte Extrusionskopf 1 weist dabei den torpedoförmig ausgestalteten Dorn 2 auf, wobei der Dorn 2 in dem Gehäuse 3 des Extrusionskopfs 1 in die Extrusionsrichtung L von einem Extrusionsmaterial umströmbar gelagert ist.

Die Extrusionsrichtung L wird hierbei durch die Längsachse des Extrusionskopf 1 bestimmt respektive fällt diese mit der Längsachse zusammen, wobei der Eintritt des Extrusionsmaterials über die stromauf des Dorns 2 ausgeführte Eintrittsöffnung 17 des Gehäuses 3, der Austritt des länglichen Hohlkörpers als Extrudat 16 aus der stromab des Mundstücks 6 ausgeführten Austrittsöffnung 18 des Gehäuses 3 erfolgt. Auch die Längsachse des Dorns 2 ist in Richtung der Extrusionsrichtung L ausgerichtet und fällt zudem mit der Längsachse des Extrusionskopfs 1 zusammen.

Die zuvor genannte torpedoförmige Gestalt des Dorns 2 ergibt sich dadurch, dass dieser einen zylindrischen Abschnitt und sich in Richtung der Längsachse des Dorns 2 beidseitig des zylindrischen Abschnitts anschließende konische Abschnitte aufweist. An den dem Mundstück zugewandten konischen Abschnitt schließ sich weiterhin der Mundstückabschnitt 4 des Dorns 2 an.

Der endseitige Mundstückabschnitt 4 des Dorns 2 ist hierbei in der Öffnung 5 des in Extrusionsrichtung L stromab des Dorns 2 angeordneten Mundstücks 6 angeordnet, wodurch zwischen Mundstückabschnitt 4 und Mundstück 6 der in seiner Geometrie veränderliche und in dieser Weiterbildung als Ringspalt ausgebildete, umlaufende Spalt 7 geformt ist.

Die Veränderung des umlaufenden Ring-Spalts 7 wird hierbei dadurch ermöglicht, dass der Dorn 2 um die Achse Q quer zur Extrusionsrichtung L schwenkbar sowie entlang der Achse Q längsbeweglich im Gehäuse 3 gelagert ist. Auf Basis dieser Lagerung lässt sich die Geometrie des Ring-Spalts 7 in zwei Freiheitsgraden quer, hierbei im Speziellen radial zur Extrusionsrichtung L verändern, wodurch im Extrusionskopf 1 eine Ring-Spaltverstellung etabliert und eine radiale Wanddickenverstellung des den Hohlkörper formenden Extrudats 16 ermöglicht ist.

In diesem Zusammenhang ist zudem das Mundstück 6 in Extrusionsrichtung L axialbeweglich in dem Gehäuse 3 des Extrusionskopfs 1 angeordnet, wodurch in dieser Weiterbildung neben der bereits genannten radialen Ring-Spaltverstellung respektive der radialen Wanddickenverstellung zudem eine axiale Ring-Spaltverstellung respektive eine axiale Wanddickenverstellung realisiert ist. Der jeweilige Hub, welchen der Mundstückabschnitt 4 aufgrund der Schwenkbewegung und/oder der Längsbewegung des Dorns 2 um und/oder entlang der Achse Q in der Öffnung 5 ausführt, soll dabei in einem Bereich geringer als 0,5 Millimeter, bevorzugt geringer als 0,05 Millimeter liegen.

Mittels dieser Wanddickenverstellungen ließe sich einerseits die geometrische Ausgestaltung des sich aus dem Extrudat 16 ergebenden Hohlkörpers entlang seiner Längsachs-Richtung anpassen. Bevorzugt wird die radiale Wanddickenverstellung jedoch genutzt, um Abweichungen des Extrudats 16 von dessen Soll-Gestalt Im Wesentlichen zu vermeiden. Hierzu wird bei der Extrusion des Extrudats 16 eine Abweichung der Ist-Gestalt, hierbei insbesondere der Querschnittsform und/oder der Wanddicke, des Extrudats 16 von einer Soll-Gestalt des Extrudats bestimmt und der Ring-Spalt 7 des Extrusionskopfes 1 durch eine Schwenk- und/oder Längsbewegung des Dorns 2 die Abweichung ausgleichend nachgeregelt.

Fortführend ist die Achse Q in der Weiterbildung der Figur 1 über den als Stegdornhalter ausgeführten, länglichen Halter 8 verkörpert, über welchen der Dorn 2 entsprechend im Gehäuse 3 gelagert ist. Die zweiseitig unmittelbar an den Dorn 2 angrenzender Abschnitte des Halters 8 sind unterdies als dünnwandige Stege 20 ausgebildet. Dabei ist jeder Steg 20 derart am Dorn 2 angeordnet, dass die beiden dünnen Seiten jedes Steges 20, also die zwei Seiten der Stege 20 mit den geringsten Abmessungen, in der dargestellten unverschwenkten Stellung des Dorns 2 in Extrusionsrichtung L ausgerichtet sind, sodass ein Strömungswiderstand der Stege 20 bei Umströmung des Dorns 2 mit dem Extrusionsmaterial minimal ist. Die zweiseitige Lagerung des Dorns 2 ist ferner über die jeweils in den Lageraufnahmen 9 angeordneten und als Buchsen 12 ausgeführten Lagerelemente 10 realisiert. Hierbei ist an jedem der zwei Teile des zweiteilig ausgeführten und als Stegdornhalter vorliegenden Halters 8 ein Lagerabschnitt 11 ausgeformt, über welche der Halter 8 und somit der mit dem Halter 8 verbundene Dorn 2 in den Buchsen 12 gelagert ist.

Zur Abdichtung des Extrusionskopfs 1 gegenüber einem Austritt von Extrusionsmaterial ist an dem dem Dorn 2 zugewandten Ende der in der Darstellung unteren Buchse 12 die Dichtlippe 13 ausgeformt. Diese wird bedingt durch den während eines Extrusionsprozesses über das Extrusionsmaterial auf die Dichtlippe 13 wirkenden Druck in Richtung des Lagerabschnitts 11 des Halters 8 verformt und ist somit quasi selbstdichtend ausgebildet.

Wie der Weiterbildung des Extrusionskopfs 1 der Figur 1 zu entnehmen ist, erstreckt sich der Halter 8 zweiseitig durch das Gehäuse 3 bis auf eine Außenseite des Gehäuses 3. Dabei ist je endseitig des Halters 8 je ein Arm 14 an dem Halter 8 angeordnet und die Arme 14 selbst sind zudem untereinander über ein Gestänge miteinander verbunden. Die Anordnung der Arme 14 am Halter 8 erfolgt hierbei über eine Kraft- und/oder Formschlussverbindung unter Verwendung der komplementären Polygonausformungen 19 zwischen den Armen 14 und dem Halter 8. Zur Realisierung der Schwenkbewegung um sowie der Längsbewegung entlang der Achse Q quer zur Extrusionsrichtung L ist der Dorn 2 über den Halter 8 sowie die Arme 14 mit zwei Stellantrieben 15 mittelbar verbunden. Über deren Stellbewegungen werden dabei die Schwenk- sowie Längsbewegung des Dorns 2 initiiert und das zuvor erwähnte abweichungsausgleichende Nachregeln ermöglich. Hierfür greift ein Stellantrieb 15 am Gestänge sowie ein Stellantrieb 15 unmittelbar am Halter 8 an.

### BEZUGSZEICHENLISTE

| | | | |
|---|---|---|---|
| 1 | Extrusionskopf | 16 | Extrudat |
| 2 | Dorn | 17 | Eintrittsöffnung |
| 3 | Gehäuse | 18 | Austrittsöffnung |
| 4 | Mundstückabschnitt | 19 | Polygonausformungen |
| 5 | Öffnung | 20 | Steg |
| 6 | Mundstück | L | Extrusionsrichtung |
| 7 | Spalt | Q | Achse |
| 8 | Halter | | |
| 9 | Lageraufnahme | | |
| 10 | Lagerelement | | |
| 11 | Lagerabschnitt | | |
| 12 | Buchse | | |
| 13 | Dichtlippe | | |
| 14 | Arm | | |
| 15 | Stellantrieb | | |

## Patentansprüche

1. Extrusionskopf (1) aufweisend einen Dorn (2), welcher in einem Gehäuse (3) des Extrusionskopfs (1) von einem Extrusionsmaterial in eine Extrusionsrichtung (L) des Extrusionskopfs (1) umströmbar gelagert ist und hierbei ein endseitiger Mundstückabschnitt (4) des Dorns (2) in einer Öffnung (5) eines in Extrusionsrichtung (L) stromab des Dorns (2) angeordneten Mundstücks (6) des Extrusionskopfs (1) einen in seiner Geometrie veränderlichen, umlaufenden Spalt (7) zwischen Mundstückabschnitt (4) und Mundstück (6) bildend angeordnet ist und der Dorn (2) um zumindest eine Achse (Q) quer zur Extrusionsrichtung (L) schwenkbar im Gehäuse (3) des Extrusionskopfs (1) gelagert ist, **dadurch gekennzeichnet, dass** der Dorn (2) in Richtung der Achse (Q) und somit quer zur Extrusionsrichtung (L) längsbeweglich gelagert ist.

2. Extrusionskopf (1) nach Anspruch 1, **dadurch gekennzeichnet, dass** der Dorn (2) an einem die Achse (Q) verkörpernden, länglichen Halter (8) angeordnet ist.

3. Extrusionskopf (1) nach Anspruch 1 oder 2, **dadurch gekennzeichnet, dass** der Extrusionskopf (1) zumindest ein in einer in dem Gehäuse (3) ausgeformten Lageraufnahme (9) angeordnetes Lagerelement (10) aufweist, wobei der Halter (8) über einen am Halter (8) ausgeformten Lagerabschnitt (11) in dem Lagerelement (10) gelagert ist.

4. Extrusionskopf (1) nach zumindest einem der vorhergehenden Ansprüche, **dadurch gekennzeichnet, dass** das Lagerelement (10) eine Buchse (12) ist und an der Buchse (12) endseitig eine Dichtlippe (13) ausgeformt ist.

5. Extrusionskopf (1) nach zumindest einem der vorhergehenden Ansprüche, **dadurch gekennzeichnet, dass** eine zwischen dem Lagerelement (10) und dem Lagerabschnitt (11) des Halters (8) etablierte Passung eine Spaltbreite aufweist, welche eine definierte Leckage des Extrusionsmaterials ermöglicht und/oder die Passung einen auf die definierte Leckage abgestimmte, definierte Spaltbreite aufweist.

6. Extrusionskopf (1) nach zumindest einem der vorhergehenden Ansprüche, **dadurch gekennzeichnet, dass** das Lagerelement (10) eine Buchse (12) ist, wobei wenigstens ein Teil der Buchse (12) aus einem Elastomer besteht.

7. Extrusionskopf (1) nach zumindest einem der vorhergehenden Ansprüche, **dadurch gekennzeichnet, dass** der - ausschließlich - eine aus einem Elastomer bestehende Teil der Buchse (12) mit dem Lagerabschnitt (11) - und dem nicht aus einem Elastomer bestehenden zweiten Teil der Buchse (12) - fest verbunden ist, wobei der aus einem Elastomer bestehende Teil der Buchse sich verformend eine gleitende Dreh- und/oder Längsbewegung des Halters (8) gegenüber dem aus dem Elastomer bestehenden Teil der Buchse (12) unterbindet.

8. Extrusionskopf (1) nach zumindest einem der vorhergehenden Ansprüche, **dadurch gekennzeichnet, dass** zwischen Lagerelement (10) und Lagerabschnitt (11) des Halters (8) eine mit dem Lagerelement (10) und dem Lagerabschnitt (11) - stoffschlüssig oder kraft- und/oder formschlüssig und somit - fest verbundene Dichtung ausgeführt ist, welche sich verformend eine gleitende Dreh- und/oder Längsbewegung des Halters (8) gegenüber der Dichtung unterbindet.

9. Extrusionskopf (1) nach zumindest einem der vorhergehenden Ansprüche, **dadurch gekennzeichnet, dass** zwischen Lagerelement (10) und Lagerabschnitt (11) des Halters (8) eine schleifende Dichtung ausgeführt ist.

10. Extrusionskopf (1) nach zumindest einem der vorhergehenden Ansprüche, **dadurch gekennzeichnet, dass** das Mundstück (6) in Extrusionsrichtung (L) axialbeweglich in dem Gehäuse (3) des Extrusionskopfs (1) angeordnet ist.

11. Extrusionskopf (1) nach zumindest einem der vorhergehenden Ansprüche, **dadurch gekennzeichnet, dass** sich der Halter (8) wenigstens einseitig durch das Gehäuse (3) bis auf eine Außenseite des Gehäuses (3) erstreckt, wobei endseitig des Halters (8) ein Arm (14) mit dem Halter (8) verbunden ist.

12. Extrusionskopf (1) nach zumindest einem der vorhergehenden Ansprüche, **dadurch gekennzeichnet, dass** der Dorn (2) mit zumindest einem Stellantrieb (15) verbunden ist, wobei mittels des Stellantriebs (15) die Schwenk- und/oder Längsbewegung des Dorns (2) bewirkbar ist.

13. Verfahren zur Herstellung eines länglichen Hohlkörpers als Extrudat (16) einer Extrusion des Extrusionsmaterials mittels des Extrusionskopfs (1) nach zumindest einem der vorhergehenden Ansprüche, **dadurch gekennzeichnet, dass** eine Abweichung einer Ist-Gestalt des Extrudats (16) von einer Soll-Gestalt des Extrudats (16) bestimmt wird und der Spalt (7) des Extrusionskopfes (2) durch eine Schwenk- und/oder Längsbewegung des Dorns (2) die Abweichung ausgleichend nachgeregelt wird.

## Claims

1. Extrusion head (1) having a mandrel (2), which is mounted in a housing (3) of the extrusion head (1) so that an extrusion material can flow around it in an extrusion direction (L) of the extrusion head (1) and in this respect an end nozzle portion (4) of the mandrel (2) is arranged in an opening (5) in a nozzle (6), downstream of the mandrel (2) in the extrusion direction (L), of the extrusion head (1) so as to form a geometrically variable, circumferential gap (7) between the nozzle portion (4) and the nozzle (6), and the mandrel (2) is mounted in the housing (3) of the extrusion head (1) so as to be pivotable transversely in relation to the extrusion direction (L) about at least one axis (Q), **characterized in that** the mandrel (2) is mounted so as to be longitudinally movable in the direction of the axis (Q) and thus transversely in relation to the extrusion direction (L).

2. Extrusion head (1) according to Claim 1, **characterized in that** the mandrel (2) is arranged on an elongate holder (8) embodying the axis (Q).

3. Extrusion head (1) according to Claim 1 or 2, **characterized in that** the extrusion head (1) has at least one bearing element (10) arranged in a bearing receptacle (9) shaped in the housing (3), wherein the holder (8) is mounted in the bearing element (10) via a bearing portion (11) shaped on the holder (8).

4. Extrusion head (1) according to at least one of the preceding claims, **characterized in that** the bearing element (10) is a bushing (12) and a sealing lip (13) is shaped on an end of the bushing (12).

5. Extrusion head (1) according to at least one of the preceding claims, **characterized in that** a fit established between the bearing element (10) and the bearing portion (11) of the holder (8) has a gap width which enables defined leaking of the extrusion material and/or the fit has a defined gap width matched to the defined leaking.

6. Extrusion head (1) according to at least one of the preceding claims, **characterized in that** the bearing element (10) is a bushing (12), wherein at least one part of the bushing (12) consists of an elastomer.

7. Extrusion head (1) according to at least one of the preceding claims, **characterized in that** the - exclusively - one part of the bushing (12) that consists of an elastomer is fixedly connected to the bearing portion (11) - and to the second part of the bushing (12) that does not consist of an elastomer -, wherein the part of the bushing that consists of an elastomer, in deforming, prevents a sliding rotational and/or longitudinal movement of the holder (8) in relation to the part of the bushing (12) that consists of the elastomer.

8. Extrusion head (1) according to at least one of the preceding claims, **characterized in that** formed between the bearing element (10) and the bearing portion (11) of the holder (8) is a seal, which is connected - by an integral bond or force fit and/or form fit and thus - fixedly to the bearing element (10) and the bearing portion (11) and which, in deforming, prevents a sliding rotational and/or longitudinal movement of the holder (8) in relation to the seal.

9. Extrusion head (1) according to at least one of the preceding claims, **characterized in that** a rubbing seal is formed between the bearing element (10) and the bearing portion (11) of the holder (8).

10. Extrusion head (1) according to at least one of the preceding claims, **characterized in that** the nozzle (6) is arranged in the housing (3) of the extrusion head (1) so as to be axially movable in the extrusion direction (L) .

11. Extrusion head (1) according to at least one of the preceding claims, **characterized in that** the holder (8) at least on one side extends through the housing (3) to an outer side of the housing (3), wherein at the end of the holder (8) an arm (14) is connected to the holder (8) .

12. Extrusion head (1) according to at least one of the preceding claims, **characterized in that** the mandrel (2) is connected to at least one actuating drive (15), wherein the actuating drive (15) makes it possible to bring about the pivoting and/or longitudinal movement of the mandrel (2).

13. Method for producing an elongate hollow body as extrudate (16) from the extrusion of the extrusion material by means of the extrusion head (1) according to at least one of the preceding claims, **characterized in that** a deviation of an actual shape of the extrudate (16) from an intended shape of the extrudate (16) is determined and the gap (7) of the extrusion head (2) is subsequently regulated by a pivoting and/or longitudinal movement of the mandrel (2) to compensate for the deviation.

## Revendications

1. Tête d'extrusion (1) présentant un mandrin (2), qui est monté dans un boîtier (3) de la tête d'extrusion (1) de manière à pouvoir être contourné par un matériau d'extrusion dans une direction d'extrusion (L) de la tête d'extrusion (1), et sachant qu'une section d'embout (4) du mandrin (2) du côté de l'extrémité est agencée dans une ouverture (5) d'un embout (6) de la tête d'extrusion (1) agencé en aval du mandrin (2) dans la direction d'extrusion (L) en formant une fente périphérique (7) de géométrie variable entre la section d'embout (4) et l'embout (6), et le mandrin (2) est monté dans le boîtier (3) de la tête d'extrusion (1) de manière pivotante autour d'au moins un axe (Q) transversalement à la direction d'extrusion (L), **caractérisée en ce que** le mandrin (2) est monté de manière mobile longitudinalement dans la direction de l'axe (Q) et donc transversalement à la direction d'extrusion (L).

2. Tête d'extrusion (1) selon la revendication 1, **caractérisée en ce que** le mandrin (2) est agencé sur un support allongé (8) qui représente l'axe (Q).

3. Tête d'extrusion (1) selon la revendication 1 ou 2, **caractérisée en ce que** la tête d'extrusion (1) présente au moins un élément de palier (10) agencé dans un logement de palier (9) formé dans le boîtier (3), le support (8) étant monté dans l'élément de palier (10) par l'intermédiaire d'une section de palier (11) formée sur le support (8).

4. Tête d'extrusion (1) selon au moins l'une quelconque des revendications précédentes, **caractérisée en ce que** l'élément de palier (10) est une douille (12) et une lèvre d'étanchéité (13) est formée du côté de l'extrémité sur la douille (12).

5. Tête d'extrusion (1) selon au moins l'une quelconque des revendications précédentes, **caractérisée en ce qu'**un ajustement établi entre l'élément de palier (10) et la section de palier (11) du support (8) présente une largeur de fente qui permet une fuite définie du matériau d'extrusion et/ou l'ajustement présente une largeur de fente définie adaptée à la fuite définie.

6. Tête d'extrusion (1) selon au moins l'une quelconque des revendications précédentes, **caractérisée en ce que** l'élément de palier (10) est une douille (12), au moins une partie de la douille (12) étant constituée d'un élastomère.

7. Tête d'extrusion (1) selon au moins l'une quelconque des revendications précédentes, **caractérisée en ce que** l'une des parties de la douille (12), constituée, exclusivement, d'un élastomère, est reliée de manière fixe à la section de palier (11), et à la deuxième partie de la douille (12) qui n'est pas constituée d'un élastomère, la partie de la douille constituée d'un élastomère empêchant, en se déformant, un mouvement glissant de rotation et/ou longitudinal glissant du support (8) par rapport à la partie de la douille (12) constituée de l'élastomère.

8. Tête d'extrusion (1) selon au moins l'une quelconque des revendications précédentes, **caractérisée en ce qu'**entre l'élément de palier (10) et la section de palier (11) du support (8) est réalisé un joint d'étanchéité relié à l'élément de palier (10) et à la section de palier (11) par liaison de matière ou à force et/ou par complémentarité de forme et donc de manière fixe, qui, en se déformant, empêche un mouvement de rotation et/ou longitudinal glissant du support (8) par rapport au joint d'étanchéité.

9. Tête d'extrusion (1) selon au moins l'une quelconque des revendications précédentes, **caractérisée en ce qu'**un joint d'étanchéité frottant est réalisé entre l'élément de palier (10) et la section de palier (11) du support (8) .

10. Tête d'extrusion (1) selon au moins l'une quelconque des revendications précédentes, **caractérisée en ce que** l'embout (6) est agencé dans le boîtier (3) de la tête d'extrusion (1) de manière mobile axialement dans la direction d'extrusion (L).

11. Tête d'extrusion (1) selon au moins l'une quelconque des revendications précédentes, **caractérisée en ce que** le support (8) s'étend au moins d'un côté à travers le boîtier (3) jusqu'à un côté extérieur du boîtier (3), un bras (14) étant relié au support (8) du côté de l'extrémité du support (8).

12. Tête d'extrusion (1) selon au moins l'une quelconque des revendications précédentes, **caractérisée en ce que** le mandrin (2) est relié à au moins un servo-entraînement (15), le mouvement de pivotement et/ou longitudinal du mandrin (2) pouvant être effectué au moyen du servo-entraînement (15).

13. Procédé de fabrication d'un corps creux allongé en tant qu'extrudat (16) d'une extrusion du matériau d'extrusion au moyen de la tête d'extrusion (1) selon au moins l'une quelconque des revendications précédentes, **caractérisé en ce qu'**un écart entre une forme réelle de l'extrudat (16) et une forme de consigne de l'extrudat (16) est déterminé et la fente (7) de la tête d'extrusion (2) est réajustée pour compenser l'écart par un mouvement de pivotement et/ou longitudinal du mandrin (2).
